# EUROPÄISCHE PATENTSCHRIFT

(11) **EP 2 902 723 B1**
(45) Veröffentlichungstag und Bekanntmachung des Hinweises auf die Patenterteilung: **20.02.2019**
(21) Anmeldenummer: 14197078.0
(22) Anmeldetag: 10.12.2014
(51) Int. Cl.: F24S 80/65, F24S 10/75

(54) **Thermischer Sonnenkollektor**
Thermal solar collector
Capteur solaire thermique

(30) Priorität: 29.01.2014 DE 102014201599
(43) Veröffentlichungstag der Anmeldung: 05.08.2015
(73) Patentinhaber: ROBERT BOSCH GMBH, 70442 Stuttgart (DE)
(72) Erfinder: Heyen, Carina, 26835 Hesel (DE); Kosok, Juergen, 48565 Steinfurt (DE)

(56) Entgegenhaltungen:
- EP-A1- 2 241 841
- DE-A1- 2 931 549
- DE-A1- 4 241 687
- DE-A1-102006 034 476
- DE-U1-202010 003 889
- FR-A1- 2 976 055

## Beschreibung

Die Erfindung betrifft einen thermischen Sonnenkollektor mit einem Absorberblech und einer Rückwand, zwischen denen ein Zwischenraum ausgebildet ist, wobei mindestens ein Absorberrohr an der der Rückwand zugewandten Seite des Absorberblechs angeordnet ist.

### Stand der Technik

Thermische Sonnenkollektoren dienen zur Umwandlung der im Sonnenlicht enthaltenen Energie in thermische Energie. Dabei wird die Sonnenenergie absorbiert und auf eine Solarflüssigkeit übertragen, die dadurch aufgeheizt wird.

Ein gattungsgemäßer thermischer Sonnenkollektor ist aus EP2241841 A1 bekannt. Zur Erreichung hoher Wirkungsgrade wird dabei das Absorberblech in der Regel in einem Gehäuse angeordnet und unter Ausbildung eines Zwischenraumes mit einer transparenten Abdeckung abgedeckt. Rückseitig befindet sich am Absorberblech mindestens ein Absorberrohr, durch das die Solarflüssigkeit geleitet wird, um durch die vom Absorberblech aufgenommene Energie aufgewärmt zu werden. Unterhalb des Absorberrohrs ist das Gehäuse dann über eine Rückwand geschlossen. Dabei ist das Absorberrohr in der Regel stoffschlüssig mit dem Absorberblech verbunden, um eine gute Wärmeübertragung zu gewährleisten.

Zur Aufnahme des oder der Absorberrohre ist zwischen der Rückwand und dem Absorberblech ein Zwischenraum erforderlich. Zur Vermeidung von Wärmeverlusten über die Rückwand des Sonnenkollektors ist es bekannt, diesen Zwischenraum mit Schaumstoffen oder Faserstoffen auszufüllen. Diese Stoffe dienen dabei als thermische Dämmstoffe.

Schaumstoffe haben allerdings den Nachteil, dass diese selbst oder deren Begleitstoffe, beispielsweise Weichmacher, sogenanntes Fogging auslösen können. Fogging bezeichnet allgemein das das Abscheiden und Niederschlagen von chemischen Inhaltsstoffen, wie beispielsweise Weichmachern, die Verfärbungen und Eintrübungen insbesondere an der Absorberabdeckung hervorrufen können. Darüber hinaus müssen diese Schaumstoffe eine relativ hohe Beständigkeit gegenüber thermischen Lasten aufweisen, was dazu führt, dass derartige Schaumstoffe sehr hochwertig sein müssen und dementsprechend hohe Kosten verursachen.

Faserstoffe haben den Nachteil, dass deren Bindemittel bei Kontakt mit Feuchtigkeit eine korrosive Umgebung für die Materialien des Absorberblechs beziehungsweise des Absorberrohrs bilden können. Auch dabei besteht das Risiko, dass Fogging auftritt. Darüber hinaus ist die Verarbeitung der Faserstoffe relativ aufwendig, da dabei wie auch beim späteren Recycling, Schadstoffe in Form kurzer, lungengängiger Fasern auftreten.

Sowohl Schaumstoffe als auch Faserstoffe haben ferner ein relativ großes Volumen, das bei Herstellung, Transport und Lagerung nachteilig ist und entsprechende Kosten verursacht.

Der Erfindung liegt nun die Aufgabe zugrunde, die Nachteile des Stands der Technik zu beheben und insbesondere eine alternative Lösung anzugeben, um Wärmeverluste über die Rückwand des Sonnenkollektors zu verringern.

Erfindungsgemäß wird diese Aufgabe durch einen thermischen Sonnenkollektor mit den Merkmalen des Anspruchs 1 gelöst. Erfindungsgemäße Ausgestaltungen finden sich in den Unteransprüchen.

Bei einem thermischen Sonnenkollektor mit einem Absorberblech und einer Rückwand, zwischen denen ein Zwischenraum ausgebildet ist, wobei mindestens ein Absorberrohr an der der Rückwand zugewandten Seite des Absorberblechs angeordnet und wobei mindestens ein Barriereelement im Zwischenraum angeordnet ist, wobei das Barriereelement ein elastisches Material aufweist, und wobei sich das mindestens eine Absorberrohr in das elastische Material eindrückt, ist also erfindungsgemäß vorgesehen, dass das Barriereelement zumindest teilweise bürstenförmig ausgebildet ist, dabei nicht den gesamten Zwischenraum, sondern nur einen relativ geringen Teil ausfüllt und bei betriebsbereit aufgestelltem Sonnenkollektor horizontal verläuft, so dass der Zwischenraum in Teilzwischenräume unterteilt ist.

Mithilfe eines derartigen Barriereelements im Zwischenraum zwischen den in der Regel parallel zueinander angeordneten Absorberblech und der Rückwand wird eine Luftkonvektion zwischen dem Absorberblech und der Rückwand un terbrochen. Die Luftkonvektion bzw. Luftzirkulation wird angetrieben von Temperaturunterschieden der Luft innerhalb des Sonnenkollektors, die zu Dichteunterschieden dieser Luft führen. Dabei wird ausgenutzt, dass Wärmeverluste aufgrund einer Wärmeabstrahlung auf der Rückseite des Absorberblechs gegenüber den Wärmeverlusten, die durch die Luftkonvektion verursacht werden, nur eine untergeordnete Rolle spielen. Das Barriereelement füllt dabei nicht den gesamten Zwischenraum aus, sondern nur einen relativ geringen Teil. Der Zwischenraum wird dabei in Teilzwischenräume unterteilt, wodurch eine großräumige Luftkonvektion bzw. Zirkulation unterbunden wird. Eine vollflächige Wärmedämmung, wie beim Stand der Technik, wird also durch das Barriereelement bzw. mehrere Barriereelemente vollständig ersetzt. Dementsprechend sind auch die Lagerung, die Handhabung und der Transport des Barriereelements relativ einfach.

Durch die horizontale Anordnung des Barriereelements im betriebsbereit aufgestellten Sonnenkollektor erstreckt sich das Barriereelement quer zur wesentlichen Strömungsrichtung der Luft im Sonnenkollektor und kann so die Luftkonvektion zuverlässig verhindern. Dabei kann durch entsprechende Positionierung des Barriereelements auch eine Anpassung des thermischen Sonnenkollektors an die Betriebsbedingungen erfolgen. So ist eine Temperatur des Sonnenkollektors beispielsweise von der gewünschten Temperatur des Verbrauchers abhängig. Bei entsprechend hohen Temperaturen und damit hohen Absorbertemperaturen tritt eine stärkere Luftkonvektion auf als bei geringeren Temperaturen. Dem kann durch entsprechende Positionierung des Barriereelementes bzw. durch Vorsehen mehrerer Barriereelemente Rechnung getragen werden.

Um eine Überhitzung des Sonnenkollektors zu vermeiden, wenn beispielsweise keine Temperatur vom Sonnenkollektor zum Verbraucher abgeführt wird, kann das Barriereelement aktiv bewegbar sein. Beispielsweise kann über Bi-MetallElemente oder Ähnliches eine Verkippung des oder der Barriereelemente hervorgerufen werden, sobald eine Grenztemperatur erreicht bzw. überschritten wird. Es ist auch denkbar, nur einzelne Bereiche des oder der Barriereelemente zu Verformen, um Öffnungen auszubilden. Damit wird eine Luftkonvektion gezielt zugelassen, so dass Wärmeverluste auftreten und damit eine Überhitzung des Sonnenkollektors vermieden wird.

Das Barriereelement ist bürstenförmig ausgebildet. Das Barriereelement wird also durch eine schlanke bzw. schmale, lange Bürste gebildet. Eine bürstenförmige Ausgestaltung ermöglicht ein sehr flexibles Barriereelement, wobei das Absorberrohr relativ einfach in die Bürste hineingedrückt werden kann.

Bevorzugterweise verschließt das Barriereelement einen Spalt zwischen Absorberblech und Rückwand zumindest größtenteils. Der Spalt entspricht dabei der Höhe des Zwischenraums zwischen Absorberblech und Rückwand. Damit erfolgt zum einen eine wirksame Unterbrechung einer Luftkonvektion, zum anderen kann das Absorberblech sich über das Barriereelement an der Rückwand abstützen. Insbesondere bei mehreren Barriereelementen kann somit die parallele Lagerung des Absorberblechs gegenüber der Rückwand sichergestellt werden. Das Barriereelement dient damit zusätzlich als Abstandshalter zwischen Rückwand und Absorberblech.

In einer bevorzugten Weiterbildung ist das Barriereelement leistenförmig ausgebildet. Es ist also geradlinig ausgebildet und weist eine relativ lange Längserstreckung im Verhältnis zu seinem Querschnitt auf. Dabei ist eine Höhe des Barriereelements günstigerweise größer als seine Dicke, wobei der Querschnitt insbesondere rechteckig ausgebildet ist. Bei betriebsbereit aufgestelltem Sonnenkollektor verläuft es im Wesentlichen horizontal. Somit kann das Barriereelement beispielsweise aus einem Flachmaterial gebildet sein. Damit ist es möglich, das Barriereelement mit einer relativ geringen Masse herzustellen, sodass das Gewicht des Sonnenkollektors gering gehalten wird.

In einer bevorzugten Ausgestaltung ist das Barriereelement zumindest teilweise einstückig mit der Rückwand ausgebildet. Die Montage des Sonnenkollektors wird dadurch stark vereinfacht. Eine falsche Positionierung des Barriereelements wird damit ebenfalls ausgeschlossen.

Alternativ können an der Rückwand Halteelemente für das Barriereelement ausgebildet sein, mit denen das Barriereelement beispielsweise verrasten kann. Es ist auch möglich, die Halteelemente nur zum Positionieren zu verwenden und das Barriereelement beispielsweise mittels Verkleben zu befestigen.

Erfindungsgemäß weist das Barriereelement ein elastisches Material auf, wobei sich das mindestens eine Absorberrohr in das elastische Material hinein drückt. Unabhängig von der gewünschten Geometrie des Absorberrohrs, ob dieses also als Rohrschlange bzw. Rohrmäander, als Rohrharfe oder Ähnliches ausgebildet ist, kann dann immer das gleiche Barriereelement verwendet werden. Dabei ergibt sich eine relativ dichte Anbindung des Barriereelements an das Absorberrohr.

Das Barriereelement ist bürstenförmig ausgebildet. In einer alternativen bevorzugten Ausgestaltung weist das Barriereelement insbesondere eine Vielzahl von Borsten auf, die sich ausgehend von einem der Rückwand zugeordneten Bürstenrücken in Richtung Absorberblech erstrecken. Durch die Vielzahl von Borsten wird eine Luftkonvektion zuverlässig unterbrochen. Der Bürstenrücken kann dabei fest mit der Rückwand verbunden werden, wobei das Absorberrohr in die in Richtung Absorberblech gerichteten Borsten hineingedrückt werden kann. Dabei werden die Borsten auseinandergedrückt.

Diese bürstenförmige Ausgestaltung des Barriereelements hat insbesondere den Vorteil, ein geringeres Risiko für Fogging zu haben, da die Borsten keine Bindemittel aufweisen müssen. Auch kommt es bei der Verarbeitung nicht zur Emission von kurzen, lungengängigen Fasern.

In einer bevorzugten Ausgestaltung weist der Sonnenkollektor mehrere Barriereelemente auf, die parallel zueinander angeordnet sind, wobei zwischen nebeneinander angeordneten Barriereelementen jeweils ein Freiraum ausgebildet ist. In jedem Fall, also unabhängig davon, ob nur ein einziges Barriereelement vorgesehen ist oder mehrere Barriereelemente, verbleibt ein freier Raum zwischen dem Absorberblech und der Rückwand. Durch das Vorsehen mehrerer Barriereelemente wird dabei die Luftkonvektion noch effizienter unterbrochen. Dabei kann sich das Absorberblech über das oder die Barriereelemente an der Rückwand abstützen. Das Barriereelement sichert also eine parallele Ausrichtung zwischen Absorberblech und Rückwand.

Die Erfindung wird im Folgenden anhand eines bevorzugten Ausführungsbeispiels in Verbindung mit den Zeichnungen näher beschrieben. Hierin zeigen:
- Figur 1: eine Draufsicht auf einen Sonnenkollektor mit möglichen Positionen für ein Barriereelement und
- Figur 2: eine geschnittene Seitenansicht des Sonnenkollektors.

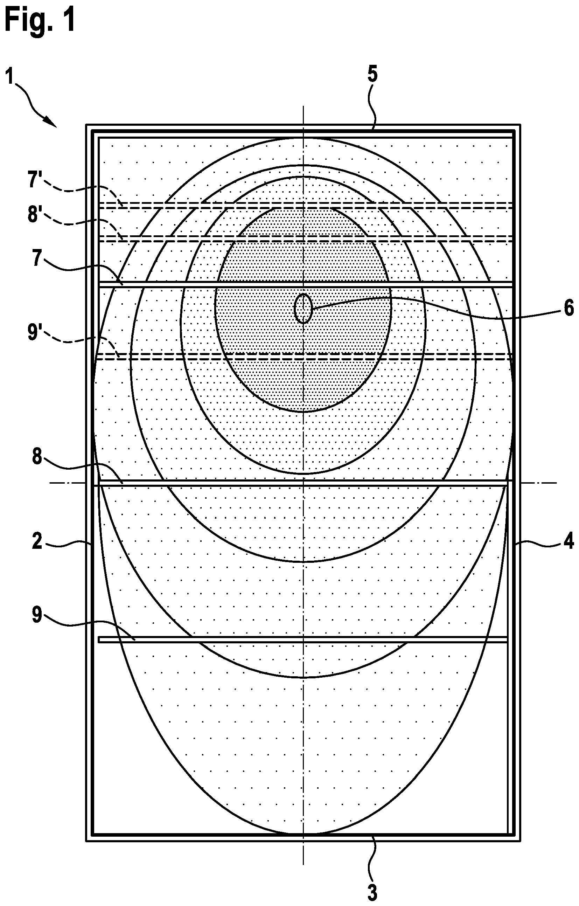

Figur 1 zeigt eine Draufsicht auf einen thermischen Sonnenkollektor 1, der ein rechteckiges Gehäuse mit vier Seitenwänden 2, 3, 4, 5 umfasst, die mit einer transparenten Abdeckung und einer Rückwand einen im Wesentlichen geschlossenen, quaderförmigen Kasten darstellen. Die wärmste Stelle des Sonnenkollektors 1 ist durch eine kleine Ellipse 6 im oberen Viertel des Sonnenkollektors 1 symbolisiert. Rundum laufende, geschlossene Linien deuten dabei Bereiche mit geringerer Temperatur während des Betriebes des Sonnenkollektors 1 an. Aufgrund dieser Temperaturunterschiede beginnt die im Sonnenkollektor im Zwischenraum zwischen einem Absorberblech und einer Rückwand enthaltene Luft zu zirkulieren. Dadurch treten im Sonnenkollektor 1 Wärmeverluste durch Luftkonvektion auf.

Zur Unterbrechung dieser Luftkonvektion sind erfindungsgemäß Barriereelemente 7, 8, 9 vorgesehen, die leistenförmig und geradlinig ausgebildet sind, wobei sie im betriebsbereiten Zustand des Sonnenkollektors horizontal verlaufen. Gestrichelt dargestellt mit 7', 8' und 9' sind alternative Positionen für die Barriereelemente, die vorzuziehen sind, wenn eine gewisse Luftkonvektion zugelassen werden soll, um bei hohen Betriebstemperaturen eine Überlastung der einzelnen Bauteile des Sonnenkollektors 1 zu verhindern.

Anstelle von drei Barriereelementen kann auch eine andere Anzahl von Barriereelementen vorgesehen sein, beispielsweise nur eins oder zwei oder auch mehr als drei.

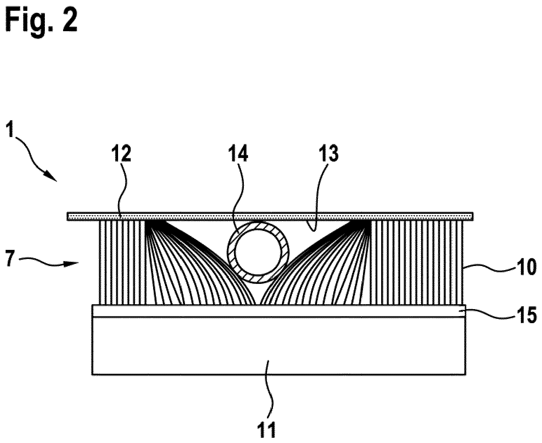

Figur 2 zeigt nun eine geschnittene, teilweise Seitenansicht des Sonnenkollektors 1. Das Barriereelement 7 ist dabei bürstenförmig ausgebildet und weist eine Vielzahl von Borsten 10 auf. Die Borsten 10 erstrecken sich dabei von der Rückwand 11 des Sonnenkollektors 1 bis zum Absorberblech 12, wobei sie sowohl an der Rückwand 11 als auch am Absorberblech 12 anliegen. Das Barriereelement 7 dient damit auch als Abstandselement, sorgt also dafür, dass ein Spalt zwischen Absorberblech 12 und Rückwand 11 konstant ist. Das Absorberblech 12 und die Rückwand 11 verlaufen also unter Ausbildung eines Zwischenraums parallel zueinander.

An einem Bürstenrücken 15 des Barriereelements 7 sind die Borsten 10 gehalten. Dabei ist das Barriereelement 7 mit dem Bürstenrücken 15 gegenüber der Rückwand 11 festgelegt.

An der der Rückwand 11 zugewandten Seite 13 des Absorberblechs 12 ist ein Absorberrohr 14 angeordnet, das insbesondere stoffschlüssig mit dem Absorberblech 12 verbunden ist. Die vom Absorberblech 12 absorbierte Wärmeenergie kann somit effizient auf die durch das Absorberrohr 14 geführte Solarflüssigkeit übertragen werden.

Das Absorberrohr 14 ist bei dieser Ausgestaltung in das Barriereelement 7 hineingedrückt und drückt dabei einzelne Borsten 10 auseinander. Dabei ergeben sich zwar zusätzliche Zwischenräume, durch die aber nur eine relativ geringe, vernachlässigbare Luftkonvektion möglich ist. Gerade bei einer Vielzahl von quer zur Längserstreckung des Barriereelements angeordneten Borsten kann ein dabei auftretender Spalt weitgehend minimiert werden.

Die erfindungsgemäße Ausgestaltung, nämlich das Vorsehen linienförmiger Barriereelemente anstelle von vollflächigen Dämmstoffen, wobei die Einbaulage der Barriereelemente horizontal ist, können Wärmeverluste durch Luftkonvektion weitgehend reduziert werden, wobei gleichzeitig das Risiko von Fogging reduziert und die Verarbeitung vereinfacht wird. Dabei weisen die Barriereelemente gegenüber den bisher üblichen Dämmelementen ein geringeres Volumen auf und führen zu einer Gewichtsersparnis am fertigen Sonnenkollektor. Ferner können die oder das Barriereelement nicht nur zur Unterbrechung einer Luftkonvektion im Zwischenraum zwischen Absorberblech und Rückwand dienen, sondern auch dazu, einen möglichst planparallelen Abstand zwischen Absorber und Rückwand und damit zwischen Absorberblech und der transparenten Abdeckung des Sonnenkollektors zu halten.

Die Verbindung zwischen dem Barriereelement und der Rückwand sowie gegebenenfalls dem Absorberblech kann dabei insbesondere stoffschlüssig und/oder formschlüssig erfolgen. Durch eine entsprechende Positionierung der Barriereelemente kann dabei mehr oder weniger Luftkonvektion zugelassen werden, um so die thermische Belastung der Bauteile des Sonnenkollektors zu beeinflussen.

Bei der Ausgestaltung des Barriereelements als bürstenförmiges Element ist insbesondere die Höhe und Breite der Borsten, deren Elastizität sowie deren Anzahl pro cm² zueinander einstellbar, um den Sonnenkollektor an unterschiedliche Bedingungen anzupassen. Dabei ist es auch denkbar, beispielsweise einen Teil der Borsten durch ein Bi-Metall oder Ähnliches zu bilden, um so bei Überschreiten einer Grenztemperatur eine gewünschte Verformung der Borsten zu erreichen, so dass eine vermehrte Luftkonvektion auftritt und damit eine weitere Erwärmung des Sonnenkollektors zumindest verringert wird.

Gegenüber herkömmlichen Solarkollektoren ermöglicht die Erfindung damit eine Material- und Kostenersparnis sowie einen vereinfachten Aufbau.

## Patentansprüche

1. Thermischer Sonnenkollektor (1) mit einem Absorberblech (12) und einer Rückwand (11), zwischen denen ein Zwischenraum ausgebildet ist, wobei mindestens ein Absorberrohr (14) an der der Rückwand (11) zugewandten Seite des Absorberblechs (12) angeordnet ist, und wobei mindestens ein Barriereelement (7, 8, 9) im Zwischenraum angeordnet ist, wobei das Barriereelement (7, 8, 9) ein elastisches Material aufweist, und wobei sich das mindestens eine Absorberrohr (14) in das elastische Material eindrückt, **dadurch gekennzeichnet, dass** das Barriereelement (7, 8, 9) zumindest teilweise bürstenförmig ausgebildet ist, dabei nicht den gesamten Zwischenraum, sondern nur einen relativ geringen Teil ausfüllt und bei betriebsbereit aufgestelltem Sonnenkollektor (1) horizontal verläuft, so dass der Zwischenraum in Teilzwischenräume unterteilt ist.

2. Sonnenkollektor nach Anspruch 1, **dadurch gekennzeichnet, dass** das Barriereelement (7, 8, 9) einen Spalt zwischen Absorberblech (12) und Rückwand (11) zumindest größtenteils verschließt.

3. Sonnenkollektor nach Anspruch 1 oder 2, **dadurch gekennzeichnet, dass** das Barriereelement (7, 8, 9) leistenförmig ausgebildet ist

4. Sonnenkollektor nach einem der vorhergehenden Ansprüche, **dadurch gekennzeichnet, dass** das Barriereelement (7, 8, 9) zumindest teilweise einstückig mit der Rückwand (11) ausgebildet ist.

5. Sonnenkollektor nach einem der vorhergehenden Ansprüche, **dadurch gekennzeichnet, dass** das Barriereelement (7, 8, 9) eine Vielzahl von Borsten (10) aufweist, die sich ausgehend von einem der Rückwand (11) zugeordneten Bürstenrücken (15) in Richtung Absorberblech (12) erstrecken.

6. Sonnenkollektor nach einem der vorhergehenden Ansprüche, **dadurch gekennzeichnet, dass** mehrere Barriereelemente (7, 8, 9) parallel zueinander angeordnet sind, wobei zwischen nebeneinander angeordneten Barriereelementen (7, 8, 9) jeweils ein Freiraum ausgebildet ist.

## Claims

1. Thermal solar collector (1) having an absorber sheet (12) and a rear wall (11) between which an intermediate space is formed, wherein at least one absorber pipe (14) is arranged on that side of the absorber sheet (12) facing the rear wall (11), and wherein at least one barrier element (7, 8, 9) is arranged in the intermediate space, wherein the barrier element (7, 8, 9) has an elastic material, and wherein the at least one absorber pipe (14) presses into the elastic material, **characterized in that** the barrier element (7, 8, 9) is configured at least partly in the form of a brush, and in the process does not fill the entire intermediate space but rather just a relatively small part and runs horizontally when the solar collector (1) is set up ready for operation, such that the intermediate space is divided into partial intermediate spaces.

2. Solar collector according to Claim 1, **characterized in that** the barrier element (7, 8, 9) at least for the most part closes a gap between the absorber sheet (12) and the rear wall (11).

3. Solar collector according to Claim 1 or 2, **characterized in that** the barrier element (7, 8, 9) is configured in the form of a strip.

4. Solar collector according to one of the preceding claims, **characterized in that** the barrier element (7, 8, 9) is formed at least partly integrally with the rear wall (11).

5. Solar collector according to one of the preceding claims, **characterized in that** the barrier element (7, 8, 9) has a multiplicity of bristles (10) that extend starting from the back of a brush (15) assigned to the rear wall (11) in the direction of the absorber sheet (12) .

6. Solar collector according to one of the preceding claims, **characterized in that** a plurality of barrier elements (7, 8, 9) are arranged parallel to one another, wherein a free space is in each case formed between adjacently arranged barrier elements (7, 8, 9).

## Revendications

1. Capteur solaire thermique (1) avec une tôle d'absorbeur (12) et une paroi arrière (11), entre lesquelles un espace intermédiaire est formé, dans lequel au moins un tube d'absorbeur (14) est disposé sur le côté de la tôle d'absorbeur (12) tourné vers la paroi arrière (11), et dans lequel au moins un élément de barrière (7, 8, 9) est disposé dans l'espace intermédiaire, dans lequel l'élément de barrière (7, 8, 9) présente un matériau élastique, et dans lequel ledit au moins un tube d'absorbeur (14) s'enfonce dans le matériau élastique, **caractérisé en ce que** l'élément de barrière (7, 8, 9) est réalisé au moins partiellement en forme de brosse, **en ce qu'**en l'occurrence il ne remplit pas entièrement l'espace intermédiaire mais seulement une partie relativement faible et **en ce qu'**il s'étend horizontalement lorsque le capteur solaire (1) est en position de fonctionnement, de telle manière que l'espace intermédiaire soit divisé en espaces intermédiaires partiels.

2. Capteur solaire selon la revendication 1, **caractérisé en ce que** l'élément de barrière (7, 8, 9) ferme au moins pour la plus grande partie une fente entre la tôle d'absorbeur (12) et la paroi arrière (11).

3. Capteur solaire selon la revendication 1 ou 2, **caractérisé en ce que** l'élément de barrière (7, 8, 9) est réalisé en forme de barrette.

4. Capteur solaire selon l'une quelconque des revendications précédentes, **caractérisé en ce que** l'élément de barrière (7, 8, 9) est réalisé au moins en partie d'une seule pièce avec la paroi arrière (11).

5. Capteur solaire selon l'une quelconque des revendications précédentes, **caractérisé en ce que** l'élément de barrière (7, 8, 9) présente une multiplicité de poils (10), qui s'étendent à partir d'un dos de brosse (15) associé à la paroi arrière (11) en direction de la tôle d'absorbeur (12).

6. Capteur solaire selon l'une quelconque des revendications précédentes, **caractérisé en ce que** plusieurs éléments de barrière (7, 8, 9) sont disposés parallèlement l'un à l'autre, dans lequel un espace libre est formé respectivement entre des éléments de barrière (7, 8, 9) disposés l'un à côté de l'autre.
